# EUROPÄISCHE PATENTSCHRIFT

(11) **EP 3 456 485 B1**
(45) Veröffentlichungstag und Bekanntmachung des Hinweises auf die Patenterteilung: **17.02.2021**
(21) Anmeldenummer: 17191304.9
(22) Anmeldetag: 15.09.2017
(51) Int. Cl.: B25J 9/16

(54) **OPTIMIEREN EINES AUTOMATISIERTEN VORGANGES ZUM AUSWÄHLEN UND GREIFEN EINES OBJEKTES DURCH EINEN ROBOTER**
OPTIMISATION OF AN AUTOMATED PROCESS FOR SELECTING AND GRIPPING AN OBJECT BY A ROBOT
OPTIMISATION D'UN PROCESSUS AUTOMATIQUE PERMETTANT LA SÉLECTION ET LA MANIPULATION D'UN OBJET PAR UN ROBOT

(43) Veröffentlichungstag der Anmeldung: 20.03.2019
(73) Patentinhaber: Siemens Aktiengesellschaft, 80333 München (DE)
(72) Erfinder: Witt, Mathias, 90459 Nürnberg (DE)

(56) Entgegenhaltungen:
- EP-A1- 2 537 645
- DE-A1-102016 009 030
- DE-A1-102016 013 731

## Beschreibung

Die Erfindung betrifft ein Verfahren zum Optimieren eines automatisierten Vorganges zum Auswählen und Greifen eines Objektes durch einen Roboter unter Verwendung eines maschinellen Lernalgorithmus.

Fertigungsanlagen oder Verpackungsanlagen weisen in unterschiedlichsten Branchen der Industrieautomatisierung oftmals Förderbänder auf, auf welchen sich Objekte oder Produkte oder Teile von Produkten unsortiert oder unregelmäßig befinden. Beispielsweise finden sich vor allem in der Primär- und Sekundärverpackungsbranche, beispielweise in der Nahrungs- und Genussmittelindustrie, häufig zentrale Förderbänder, auf welchen sich zu verpackende Produkte befinden. Die Anzahl und die Anordnung der Produkte pro Förderfläche variiert dabei. Für einen Verpackungsvorgang werden so oftmals ein oder mehrere Industrieroboter, so genannte Delta-Picker oder Knickarmroboter, in Reihe verwendet, um ein sogenanntes Pick and Place durchzuführen. Darunter wird das gezielte Greifen von Objekten und deren Platzierung an einem anderen Ort, beispielsweise in einem Verpackungskarton, verstanden. Zur Ermittlung der sogenannten Pick-Positionen der Produkte auf dem Förderband kommen Sensoren zum Einsatz, wie beispielsweise Kamerasysteme.

Aufgrund der variierenden Anzahl der Produkte auf dem Förderband kommt es oftmals zu Stillstandszeiten oder unproduktiven Phasen einzelner Roboter. Die Roboter agieren nach dem Firstin-first-out-Prinzip, bei welchem die Priorisierung eines aufzunehmenden Produktes lediglich anhand einer in einer Dimension erfassten Position auf dem Förderband erfolgt. Das heißt, dass die Objekte hinsichtlich ihrer Position auf dem Förderband in Richtung der Laufrichtung des Bandes analysiert werden. Je weiter sich das Produkt auf dem Band in Förderrichtung befindet, desto höher ist die Priorität. Das Produkt mit der höchsten Priorität, welches im Arbeitsbereich eines Roboters liegt, wird aufgenommen oder gegriffen.

Die europäische Patentanmeldung EP2537645A1 zeigt ein Robotersystem mit Bilderfassungseinheit und Werkstück-Detektionseinheit. Eine Zuweisungseinheit einer Steuerung ermittelt, an welchen von mehreren Robotern eine Bearbeitungsanweisung übermittelt wird basierend auf einer von der Werkstück-Detektionseinheit erhaltenen Förderbandsituation der Werkstücke.

Die Offenlegungsschrift DE102016013731A1 zeigt ein Robotersystem mit Funktionen zum Vereinfachen von Lehrvorgängen und Verbessern der Betriebsleistung durch Lernen. Dabei wird ein einzelner Betriebsvorgang, beispielsweise ein Greifvorgang, eines einzelnen Roboters gelernt.

Die Offenlegungsschrift DE102016009030A1 zeigt eine Vorrichtung für maschinelles Lernen, die einen Arbeitsvorgang eines Roboters zum Aufnehmen, durch eine Handeinheit, eines beliebigen von mehreren Werkstücken, die in einer willkürlichen Weise abgelegt sind, lernt. Dabei wird ein Roboter für einen Aufnahmevorgang angelernt.

Vor diesem Hintergrund ist es eine Aufgabe der vorliegenden Erfindung, für den Betrieb und die Steuerung eines Roboters ein Verfahren sowie ein zugehöriges Computerprogrammprodukt und eine Produktionsmaschine bereitzustellen zum Optimieren eines automatisierten Vorganges zum Auswählen und Greifen eines Objektes durch einen Roboter in einer Anordnung aus mehreren Robotern, welche ein vorgebbares Optimierungskriterium berücksichtigen.

Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zum Optimieren eines automatisierten Vorganges zum Auswählen und Greifen eines Objektes durch einen Roboter in einer Anordnung aus mehreren Robotern hinsichtlich eines vorgebbaren Optimierungskriteriums, wobei die potenziell zu greifenden Objekte hinsichtlich ihrer Lage im Raum und einem Zeitpunkt ihres Eintreffens unregelmäßig auftreten, aufweisend die folgenden Schritte:
- Ermitteln von durch die Roboter potenziell zu greifenden Objekten;
- Ermitteln jeweils eines Prioritätskenners sowie einer Zuordnung zu einem der Roboter für die potenziell zu greifenden Objekte mittels eines maschinellen Lernalgorithmus unter Berücksichtigung des Optimierungskriteriums; und
- Auswählen und Greifen in Abhängigkeit von der Zuordnung und dem Prioritätskenner.

Unter einem Roboter wird in der vorliegenden Anmeldung eine Maschine verstanden, welche gesteuert oder geregelt automatisiert Bewegungsabläufe durchführen kann. Alternative Begriffe sind Manipulator oder ein Bewegungsautomat mit mehreren Achsen.

Unter einer Anordnung aus mehreren Robotern ist ein System zu verstehen, in welchem mehrere Roboter in einer definierten Beziehung zueinander stehen. Beispielsweise ist eine räumliche Nähe gegeben oder eine gemeinsame Steuerung der verschiedenen Roboter innerhalb einer Anlage vorgesehen oder es sind Kommunikationsbeziehungen unter den Robotern vorhanden, so dass eine dezentrale Abstimmung der Roboter untereinander möglich ist.

Die zu greifenden Objekte treten unregelmäßig auf im Hinblick auf ihre Lage oder Position oder Anordnung im Raum und einen Zeitpunkt ihres Eintreffens. Das bedeutet, dass nicht vorhergesagt wird und insbesondere nicht vorhergesagt werden kann, zu welchem Zeitpunkt Objekte an welcher Position im Arbeitsbereich der Roboter auftreten.

Das Ermitteln von denjenigen Objekten, welche durch die Roboter potenziell greifbar sind, erfolgt beispielsweise derart, dass zu einem festgelegten Zeitpunkt und insbesondere wiederholt zu festgelegten Zeitpunkten die Gesamtheit der durch die mehreren Roboter der Anlage greifbaren Objekte ermittelt werden. In einer Variante werden die potenziell greifbaren Objekte je Roboter separat ermittelt.

Das Ermitteln jeweils eines Prioritätskenners sowie einer Zuordnung zu einem der Roboter für jedes der potenziell zu greifenden Objekte geschieht mittels eines maschinellen Lernalgorithmus. Der maschinelle Lernalgorithmus ist dabei so ausgestaltet, dass er das Optimierungskriterium bei der Ermittlung des Prioritätskenners und der Zuordnung berücksichtigt. Dabei geht die Kapazität der verschiedenen Roboter der Anordnung mit in die Berechnung ein. Der Prioritätskenner regelt dabei die Priorität derjenigen Objekte, welche gemeinsam einem Roboter zugeordnet wurden. Die Zuordnung wiederum wird nicht anhand der Position der Objekte hinsichtlich des Arbeitsbereiches der unterschiedlichen Roboter alleine ermittelt, sondern ist das Ergebnis des maschinellen Lernalgorithmus, der neben der Position eines Objektes selbst auch die Positionen der anderen Objekte sowie der anderen Objekte im Arbeitsbereich anderer Roboter und die möglichen Greifvorgänge der anderen Roboter sowie das Optimierungskriterium berücksichtigt. Erst durch den maschinellen Lernalgorithmus und durch die Möglichkeit, diesem Algorithmus das Optimierungskriterium vorgeben zu können, wird die Möglichkeit geschaffen, das Auswählen und Greifen der verschiedenen Roboter aufeinander optimiert abzustimmen.

Gemäß einer Ausgestaltung werden die Objekte auf einem Förderband mit einer Förderbandgeschwindigkeit bewegt. Beispielsweise bewirkt das Förderband dabei eine geradlinige Bewegung der darauf befindlichen Objekte. Beispielsweise ist das Förderband dazu vorgesehen, Objekte von einer Verarbeitungsstation zu einer Verpackungsstation zu transportieren. Bei einem Förderband mit konstanter Geschwindigkeit ist ein Berücksichtigen der Fortbewegung der Objekte auf dem Förderband über die Zeit auf einfache Weise möglich, da sich insbesondere die Abstände der Objekte zueinander nicht verändert. Die Bewegung von Objekten komplexerer Fördersysteme kann berücksichtigt werden, indem die Steuerung des Fördersystems, beispielsweise Linearmotoren, die ein separates Ansteuern von einzelnen Förderabschnitten ermöglichen, mit der Steuerung der Roboter kommunikativ verbunden ist.

Gemäß einer Ausgestaltung wird als maschineller Lernalgorithmus ein überwachter Lernalgorithmus oder ein bestärkender Lernalgorithmus, insbesondere basieren auf einem künstlichen neuronalen Netz verwendet. Beispielsweise werden einem überwachten Lernalgorithmus in einer Trainingsphase als optimal angesehene Outputdaten eines Pick and Place Vorganges angelernt. Beispielsweise bietet ein auf einem künstlichen neuronalen Netz basierender Algorithmus die Möglichkeit, durch Gewichtung an den verschiedenen Knotenpunkten innerhalb des Netzes den Output an das gewünschte Ergebnis anzupassen.

Gemäß einer Ausgestaltung wird als maschineller Lernalgorithmus ein instanzbasierter Lernalgorithmus verwendet. Instanzbasierte Lernalgorithmen werden auch als gedächtnisbasierte Lernalgorithmen bezeichnet und arbeiten anhand einer Datenbank, wobei ein vorgefundenes Szenario mit Einträgen dieser Datenbank verglichen wird und anhand der in der Datenbank ebenfalls hinterlegten als optimal angesehenen Ergebnisse entsprechende Zuordnungen und Prioritätskenner vergeben werden.

Gemäß einer Ausgestaltung wird durch das Optimierungskriterium ein Energieverbrauch minimiert. Dabei kann das Auswählen und Greifen durch den Algorithmus so ausgewählt werden, dass die Roboter oder die Greifarme der Roboter möglichst kurze Bewegungsbahnen abfahren müssen oder diese Bewegungsabläufe mit einer möglichst geringen Bahngeschwindigkeit abgefahren werden können. Falls beispielsweise ein Verpackungsvorgang eine durch die Energieverbrauchsoptimierung bedingte Verlangsamung des Verpackungsprozesses erlaubt, beispielsweise zu Zeiten, wo ohnehin auf die Objekte aus dem vorherigen Fertigungsschritt gewartet werden muss, so können auf vorteilhafte Weise der Energieverbrauch und damit die Kosten gesenkt werden.

Gemäß einer Ausgestaltung wird der maschinelle Lernalgorithmus derart angelernt, dass eine Bahngeschwindigkeit der Roboter minimiert wird und gleichzeitig maximal viele der potenziell greifbaren Objekte durch die Roboter gegriffen werden. Entsprechend läuft der automatisierte Vorgang zum Auswählen und Greifen eines Objektes dann derart ab, dass auch nur die gerade noch ausreichende Bahngeschwindigkeit je Roboter ausgegeben wird. Dafür ist die Bahngeschwindigkeit eines Roboters entsprechend anpassbar ausgestaltet. Auf vorteilhafte Weise sinken der Momenten- und Stromverbrauch der elektrischen Antriebe bei einer reduzierten Bahngeschwindigkeit. Dies schont auch die Mechanik und reduziert eine beispielsweise gerade bei Delta Pickern hohe Getriebebeanspruchung aufgrund des starken Umkehrspiels.

Der optimierte Vorgang wird es damit je nach Konstellation der Objekte auf dem Förderband auch mit sich bringen, dass durch einen ersten Roboter potentiell noch greifbare Objekte durch diesen nicht aufgenommen sondern durchgelassen werden, und diese dann beispielsweise durch den nachfolgenden Roboter aufgenommen werden, da so die Bahngeschwindigkeit des ersten Roboters reduziert werden kann.

Kann in einer Anlernphase ein Produkt nicht aufgenommen werden, bevor es aus dem Arbeitsbereich der Anordnung der Roboter draußen ist, so gilt der Versuch als gescheitert und der Lernalgorithmus, beispielsweise ein künstliches neuronales Netz, muss derart angepasst werden, dass die Geschwindigkeit einzelner oder aller Roboter bei den gleichen Inputdaten erhöht wird.

Gemäß einer Ausgestaltung wird durch das Optimierungskriterium ein Durchsatz maximiert. Ist die zu optimierende Größe der Durchsatz, d.h. die Anzahl der getätigten Picks pro Zeiteinheit, so kann eine Effizienz der Pick and Place-Anlage gesteigert werden, zumindest unter der Annahme, dass entsprechend schnell Objekte in den Arbeitsbereich der Roboteranordnung gelangen können, beispielsweise durch höhere Aufnahmeraten des Förderbandes von einem vorherigen Schritt in einer Verpackungsanlage oder durch eine erhöhte Förderbandgeschwindigkeit.

Gemäß einer Ausgestaltung wird der maschinelle Lernalgorithmus derart angelernt, dass Stillstandszeiten der Roboter minimiert werden und gleichzeitig maximal viele der potenziell zu greifenden Objekte durch die Roboter gegriffen werden. Der optimierte Vorgang wird es damit je nach Konstellation der Objekte auf dem Förderband auch mit sich bringen, dass durch einen ersten Roboter potentiell noch greifbare Objekte durch diesen nicht aufgenommen sondern durchgelassen werden, und diese dann beispielsweise durch den nachfolgenden Roboter aufgenommen werden, da so alle Roboter insgesamt mehr Objekte greifen können und sich der Gesamtdurchsatz erhöht.

Beispielsweise wird eine Gewichtung innerhalb eines künstlichen neuronalen Netzes für eine gegebene Eingangskombination aus Objekten angepasst im Hinblick auf einen maximal erreichbaren Durchsatz. Kann ein Objekt durch keinen der Roboter aufgenommen werden, gilt der Versuch als gescheitert und die Geschwindigkeit einzelner oder aller Roboter muss erhöht werden oder eine Förderbandgeschwindigkeit reduziert.

Gemäß einer Ausgestaltung wird der maschinelle Lernalgorithmus ferner derart angelernt, dass eine variabel einstellbare Förderbandgeschwindigkeit maximiert wird. Ist die Geschwindigkeit des Förderbandes einstellbar, so kann auch diese durch den Output beispielsweise eines künstlichen neuronalen Netzes optimiert werden, sodass der Durchsatz weiter gesteigert wird und dabei weiterhin alle Objekte aufgegriffen werden.

Gemäß einer Ausgestaltung erfolgt das Ermitteln der potenziell zu greifenden Objekte mithilfe von Sensoren, insbesondere mithilfe einer oder mehrerer Kameras. Beispielsweise werden zu festlegbaren Triggerzeitpunkten mittels der Sensoren die Objekte auf einem Förderband und ihre räumliche Verteilung erfasst. Insbesondere erfolgt die Erfassung in Zykluszeiten von wenigen hundert Millisekunden.

Gemäß einer Ausgestaltung wird das Anlernen des maschinellen Lernalgorithmus in einer Anlernphase und mittels realer Objekte vorgenommen. Beispielsweise wird ein künstliches neuronales Netz angelernt, in dem Fehlversuche als solche gekennzeichnet werden und das Netz durch Gewichtung derart verändert wird, dass fehlerhafte Ergebnisse verhindert werden. Gemäß einer Ausgestaltung wird das Anlernen des maschinellen Lernalgorithmus in einer Anlernphase mittels einer Simulation der Objekte vorgenommen. Beispielsweise erhält der Algorithmus als Eingabe ein simuliertes Kamerabild.

Der Eingang oder Input für beispielsweise ein künstliches neuronales Netz ist somit eine Liste von aufzugreifenden Objekten beispielsweise eine Liste von Produkten auf einem Förderband, mit x- und y-Koordinaten. Diese Liste wird aus einem realen oder einem simulierten Kamerasystem erzeugt. Der maschinelle Lernalgorithmus oder beispielsweise das künstliche neuronale Netzwerk erzeugt als Ausgang die Priorisierung und Zuordnung der Objekte zu einzelnen Robotern. Die einzelnen Roboter wählen das Objekt innerhalb ihres Arbeitsbereiches, welches eine Zuordnung zum jeweiligen Roboter aufweist und greifen dieses, wobei zugeordnete Objekte mit der höchsten Priorität als Erstes aufgenommen werden und die weiteren Objekte in ihrer Priorität absteigend gewählt werden.
In der vorliegenden Anmeldung wird unter höchster Priorität verstanden, dass ein Objekt als Erstes gegriffen werden soll. Eine Realisierung, bei welcher beispielsweise ein Wert des Prioritätskenners niedrig ist wenn das Objekt frühzeitig aufgegriffen werden soll, ist ebenso im Schutzumfang der vorliegenden Anmeldung enthalten.

Die Erfindung betrifft ferner ein Computerprogrammprodukt gemäß Anspruch 13. Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere ein Prozessor oder ein Mikroprozessor, beispielsweise auf einer speicherprogrammierbaren Steuerung, in Frage.

Die Erfindung betrifft ferner eine Produktionsmaschine, insbesondere Verpackungsmaschine, gemäß Anspruch 14.

Bei bestehender Hardware einer Fertigungs- oder Verpackungsanlage kann durch Optimierung der Pick-Strategie mithilfe maschineller Lernalgorithmen der Anlagendurchsatz gesteigert werden. Durch Minimierung der Roboterstillstandszeiten bei maximaler Bahngeschwindigkeit kann eine Anlage mit maximal möglichem Output betrieben werden. Gleichzeitig kann insbesondere im Falle von Limitierung der Objektbereitstellung in einem vorherigen Produktionsschritt Energie im laufenden Betrieb eingespart werden, wenn die Bahngeschwindigkeit einzelner Roboter bei gleichbleibendem Durchsatz minimiert wird.

An einer spezifischen Verpackungsanlage trainierte oder angelernte maschinelle Lernalgorithmen können auch für einen Einsatz an einer anderen Anlage verwendet werden. Beispielsweise ist lediglich eine Anpassung oder eine weitere Optimierung nötig und es kann schon auf die Ergebnisse aus der Anlernphase an der spezifischen Anlage zurückgegriffen werden.

Die Erfindung wird nachfolgend anhand von Ausführungsbeispielen mithilfe der Figuren näher erläutert. Es zeigen:
- Figur 1: Eine schematische Darstellung eines Pick and Place Vorganges an einem Förderband gemäß dem Stand der Technik;
- Figur 2: Eine schematische Darstellung des Verfahrens gemäß einem ersten Ausführungsbeispiel der Erfindung;

- Figur 3: Eine schematische Darstellung eines Pick and Place Vorganges in einer Verpackungsanlage mit Förderband gemäß einem weiteren Ausführungsbeispiel der Erfindung.

In den Figuren sind funktionsgleiche Elemente mit denselben Bezugszeichen versehen, sofern nichts anderes angegeben ist.

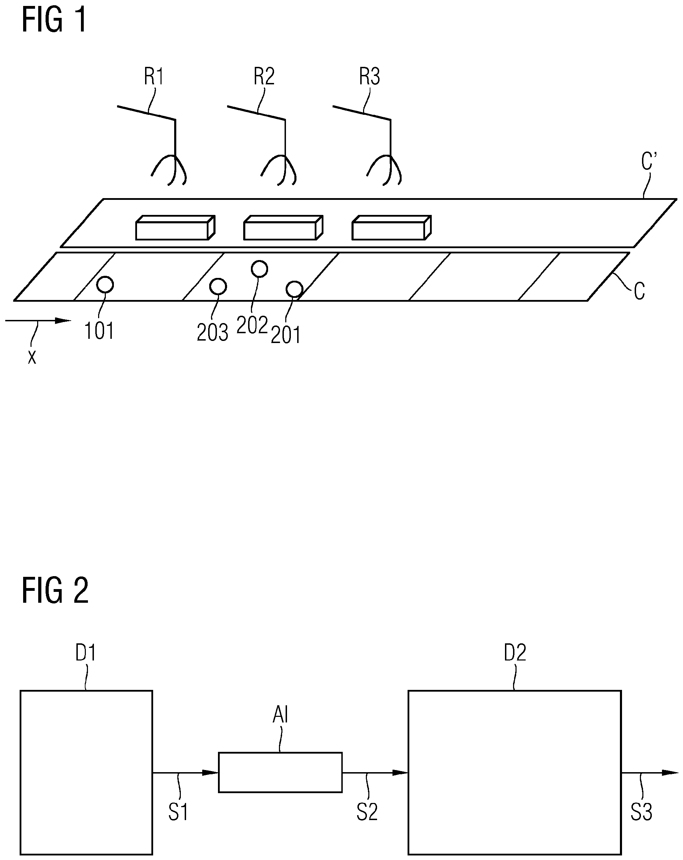

In Figur 1 ist schematisch dargestellt, wie Objekte 101, 203, 202, 201 auf einem Förderband C angeordnet sind. Es handelt sich beispielsweise um in einer Verpackungsanlage mit einer Plastikfolie verpackte Einzelprodukte, welche bereit für das Stapeln in einem Karton sind. Beispielsweise werden jeweils 6 der Einzelprodukte in einem Karton verpackt und so als Ware ausgeliefert. Dafür werden die Objekte 101, 203, 202, 201 von Robotergreifarmen R1, R2, R3 vom Förderband C aufgenommen und in Kartons auf einem weiteren Förderband C' gehoben. Der Übersichtlichkeit halber sind nur wenige Objekte dargestellt.

In realen Verpackungsanlagen treffen unregelmäßig und unkontrolliert Objekte auf dem Förderband C auf. Beispielsweise fallen sie von einem vorher in der Fertigungsanlage befindlichen Förderband herunter. Beispielsweise wurde im letzten Schritt der Bearbeitung eine Plastikfolie um ein Produkt gewickelt und das fertige Produkt soll auf dem Förderband C in die Kartons verpackt werden. Im Stand der Technik wird lediglich eine durch eine Kamera erfasste X-Position der Objekte berücksichtigt. Es handelt sich bei der X-Achse um die durch die Förderbandgeschwindigkeitsrichtung vorgegebene Achse. Somit werden Werte der X-Position eines Objektes größer, je weiter sie sich in Laufrichtung des Förderbandes befinden.

Jeder Roboter R1, R2, R3 hat einen Arbeitsbereich und wählt aus den Produkten aus seinem Arbeitsbereich, welche unter Berücksichtigung der Bandgeschwindigkeit und eines erreichbaren Aufnahmezeitpunktes durch den jeweiligen Roboter berücksichtigt werden, die Objekte in der Reihenfolge ihrer Priorität. Dabei hat das am weitesten in X-Richtung befindliche Objekt die höchste Priorität und wird als Erstes gegriffen, die folgenden Objekte werden absteigend gemäß ihrer jeweiligen Priorität aufgegriffen. Somit werden die Achsen der Roboter jeweils nach einem First in first out Prinzip angesteuert, nach welchem das Erste im Arbeitsbereich entdeckte Objekt auch als Erstes in den Karton verpackt wird. Jeder Roboter agiert somit nur innerhalb seines Arbeitsbereiches und ein Abstimmen der Roboter untereinander erfolgt nicht.

Figur 2 visualisiert die Eingabedaten D1 und Ausgabedaten D2 eines maschinellen Lernalgorithmus AI, wie er im Verfahren gemäß einem ersten Ausführungsbeispiels der Erfindung zum Einsatz kommt. Das Einsatzgebiet soll dabei das gleich wie das in Figur 1 beschriebene sein, nämlich die Verpackung von Objekten in Kartons und die Aufnahme der Objekte von einem Förderband durch Robotergreifarme. Oftmals wird der allgemeine Begriff Artificial Intelligence oder künstliche Intelligenz verwendet, um Verfahren, welche mit maschinellen Lernalgorithmen arbeiten, zu bezeichnen. Die Eingabedaten D1 werden gemäß einem ersten Ausführungsbeispiel der Erfindung beispielsweise durch die Auflistung aller von einem Sensor oder einer Kamera erfassten Objekte und der dazugehörigen Position im Raum gebildet.

Beispielsweise ist für ein Förderband lediglich eine zweidimensionale Darstellung der Raumposition erforderlich, weil alle Objekte in einer horizontalen Ebene mit konstantem Abstand in einer Z-Richtung zu den jeweiligen Robotergreifarmen liegen. Es wird beispielsweise eine X- und Y-Position erfasst, womit eine Richtung in Laufrichtung (x) eines Förderbandes sowie in der Horizontalen senkrecht dazu (y) verstanden wird. Aus einer solchen Auflistung wird in einem ersten Schritt S1 ermittelt, welche Objekte von den Robotern potenziell zu greifen sind. Dabei werden insbesondere alle Robotergreifarme und die Gesamtheit der von diesen greifbaren Objekten verstanden.

Der maschinelle Lernalgorithmus AI bestimmt nun unter Berücksichtigung des Optimierungskriteriums in einem zweiten Schritt S2 jeweils einen Prioritätskenner sowie eine Zuordnung zu einem der Roboter für alle potenziell zu greifenden Objekte. Als Output D2 oder Ergebnis liefert er eine Auflistung der Objekte mit einer Zuordnung zum Roboter gemäß dem Optimierungskriterium sowie einer Priorität. Beispielsweise wird ein instanzbasierter Lernalgorithmus zugrunde gelegt. Damit der instanzbasierte Lernalgorithmus das Optimierungskriterium umsetzen kann, kann er auf eine Datenbank zugereifen. Die mit Hilfe des Sensors erfasst Information über die aktuelle Situation auf dem Förderband kategorisiert der Algorithmus und versucht einen möglichst passenden Datenbankeintrag zu finden. In der Datenbank sind Szenarien von Objekten auf einem Förderband und vorgeschlagene, idealerweise optimierte, Lösungen zum Greifen der Objekte hinterlegt. Je ähnlicher eine aktuell vorgefundene Situation mit einer bereits in der Datenbank hinterlegten Situation ist, desto besser lässt sich die vorgeschlagene Lösung anwenden und desto besser wird ein Optimierungskriterium erfüllt. Beispielsweise kann der Algorithmus die Anforderung der Optimierung jederzeit wechseln und je nach gewähltem Optimierungskriterium auf unterschiedliche Datenbanken zugreifen, die Lösungen unter Berücksichtigung der jeweiligen Optimierungskriterien bereitstellen.

Optional enthalten die Ausgabedaten D2 die Rohdaten oder Eingabedaten D1, welche dem Lernalgorithmus bereitgestellt wurden. Die Ausgabedaten D2 ermöglichen es, einer Bewegungssteuerung auszugebende Befehle für die verschiedenen anzusteuernden Achsen zu übermitteln. Es erfolgt anhand der Zuordnung und dem Prioritätskenner das Auswählen und Greifen in einem dritten Schritt S3 mittels der Ansteuerung der einzelnen Achsen je Roboter.

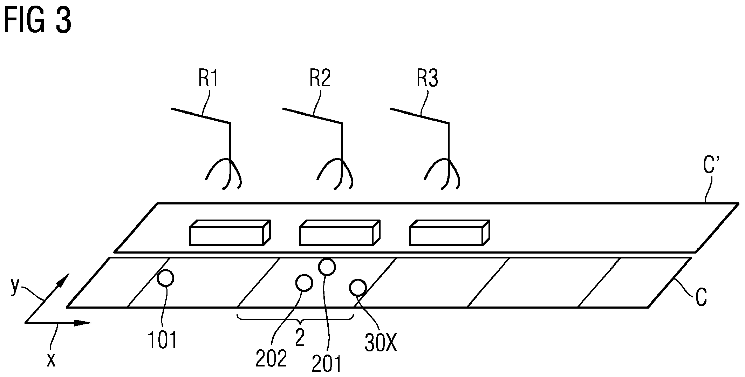

Figur 3 veranschaulicht das erfindungsgemäße Verfahren in einem zweiten Ausführungsbeispiel für eine Pick und Place Anwendung, wie sie bereits in Erläuterung von Figur 1 und 2 beschrieben wurde. Dafür wird ein Sensorsystem zur Erfassung der Objekte auf dem Förderband (nicht dargestellt) erweitert, um eine zweite Dimension erfassen zu können. Es werden in diesem Ausführungsbeispiel die X- und Y-Positionen der Objekte ermittelt. Neben dem Förderband C ist ein weiteres Förderband C' angeordnet, auf welchem sich mit den Objekten zu befüllende Kartons befinden.

Als maschineller Lernalgorithmus wird gemäß dem anhand von Figur 3 beschriebenen Ausführungsbeispiel ein künstliches neuronales Netz verwendet, welches die gesamte Verpackungsanlage im Hinblick auf den Energieverbrauch optimiert. Hinsichtlich dieses Optimierungskriteriums wurde das künstliche neuronale Netz in einer Anlernphase zuvor trainiert, sodass im laufenden Betrieb aus den Eingabedaten eines Kamerabildes, welche die Objekte mit ihrer X- und Y-Position umfassen, Ausgabedaten generiert werden, welche für jedes Objekt eine Zuordnung zu einem der Robotergreifarme R1, R2, R3 angeben sowie eine durch den zugeordneten Roboter einzuhaltende Priorisierung.

Beispielsweise ist in Figur 3 der Arbeitsbereich 2 des Robotergreifarmes R2 gezeigt, in welchem sich 3 Objekte befinden. Obwohl das Objekt 30X auf der X-Achse am Weitesten in Richtung der Förderbandbewegungsrichtung fortgeschritten ist und im Arbeitsbereich des Robotergreifarmes R2 liegt, sodass es dieser potenziell aufgreifen könnte, ist es durch das künstliche neuronale Netz dem Robotergreifarm R3 zugeordnet worden. Da das Objekt 30X in der Y-Richtung weit vom Förderband C' entfernt zum Liegen gekommen ist, ist es günstiger, das Greifen des Objektes 30X vom Robotergreifarm R3 durchführen zu lassen. Würde beispielsweise der Robotergreifarm R2 alle drei im Arbeitsbereich 2 zum liegen gekommenen Objekte verpacken wollen, so müsste der Robotergreifarm R2 die drei Objekte 201 und 202 30X mit sehr hoher Geschwindigkeit greifen, was mit einem hohen Stromverbrauch verbunden ist. Das künstliche neuronale Netz kann bei der Zuordnung der Objekte zu den Robotern berücksichtigen, dass beispielsweise Roboter R3 genügend Kapazitäten hat, das Objekt 30X beispielsweise als übernächstes Objekt zu greifen. Alle Objekte können so verpackt werden und der Energieverbrauch wird zugleich reduziert.

Mithilfe des künstlichen neuronalen Netzes ist es möglich, aus angelernten Konstellationen Prognosen abzuleiten, welche ermöglichen, dass alle Objekte aus einem Arbeitsbereich einer Mehrzahl an Robotern aufgegriffen werden und gleichzeitig der Energieverbrauch minimiert werden kann. Im vorliegenden Fall wird das Objekt 30X von vornherein dem Robotergreifarm R3 zugeordnet, sodass der Robotergreifarm R2 früher mit dem Greifen der Objekte 201 und 202 beginnen kann und somit eine niedrigere Bahngeschwindigkeit einstellen kann.

Eine Anpassung der Zuordnungen und Prioritäten erfolgt vorteilhafterweise in regelmäßigen Abständen, wobei sich über die Zeit auch eine geänderte Zuordnung oder Priorisierung ergeben kann. So kann der maschinelle Lernalgorithmus mit Hilfe der Sensoren regelmäßig die aktuelle Anordnung der Objekte auf dem Förderband und insbesondere Änderungen durch Umfallen oder das Nachkommen weiterer Objekte berücksichtigen.

Der Einfachheit halber wurde im vorgestellten Ausführungsbeispiel nur eine kleine Anzahl von Objekten visualisiert und nur für eine kleine Anzahl von Objekten eine Möglichkeit einer Optimierung beschrieben. Es versteht sich dabei von selbst, dass der Vorteil und die Möglichkeiten eines maschinellen Lernalgorithmus und speziell eines künstlichen neuronalen Netzes erst bei einer Vielzahl von Objekten, einer Vielzahl von Robotergreifarmen und ggf. zusätzlich im Zusammenspiel mit hohen Geschwindigkeiten zutage treten.

## Patentansprüche

1. Verfahren zum Optimieren eines automatisierten Vorganges zum Auswählen und Greifen eines Objektes durch einen Roboter in einer Anordnung aus mehreren Robotern hinsichtlich eines vorgebbaren Optimierungskriteriums, wobei die potentiell zu greifenden Objekte hinsichtlich ihrer Lage im Raum und einem Zeitpunkt ihres Eintreffens unregelmäßig auftreten, aufweisend die folgenden Schritte:
- Ermitteln (S1) von durch die Roboter potentiell zu greifenden Objekten;
- Ermitteln (S2) jeweils eines Prioritätskenners, wobei der Prioritätskenner die Priorität derjenigen Objekte regelt, welche gemeinsam einem Roboter zugeordnet wurden, sowie einer Zuordnung zu einem der Roboter für die potentiell zu greifenden Objekte mittels eines maschinellen Lernalgorithmus unter Berücksichtigung des Optimierungskriteriums, wobei der maschinelle Lernalgorithmus die Position des Objekts hinsichtlich des jeweiligen Arbeitsbereiches der mehreren Roboter und die Positionen der anderen Objekte sowie der anderen Objekte im Arbeitsbereich der mehreren Roboter und die möglichen Greifvorgänge der mehreren Roboter sowie das Optimierungskriterium berücksichtigt; und
- Auswählen und Greifen (S3) in Abhängigkeit von der Zuordnung und dem Prioritätskenner.

2. Verfahren nach Anspruch 1, wobei die Objekte auf einem Förderband mit einer Förderbandgeschwindigkeit bewegt werden.

3. Verfahren nach Anspruch 1 oder 2, wobei als maschineller Lernalgorithmus ein überwachter Lernalgorithmus oder ein bestärkender Lernalgorithmus, insbesondere basierend auf einem künstlichen neuronalen Netz, verwendet wird.

4. Verfahren nach einem der vorstehenden Ansprüche, wobei als maschineller Lernalgorithmus ein instanzbasierter Lernalgorithmus verwendet wird.

5. Verfahren nach einem der vorstehenden Ansprüche, wobei durch das Optimierungskriterium ein Energieverbrauch minimiert wird.

6. Verfahren nach einem der vorstehenden Ansprüche, wobei der maschinelle Lernalgorithmus derart angelernt wird, dass eine Bahngeschwindigkeit der Roboter minimiert wird und gleichzeitig maximal viele der potentiell greifbaren Objekte durch die Roboter gegriffen werden.

7. Verfahren nach einem der vorstehenden Ansprüche, wobei durch das Optimierungskriterium ein Durchsatz der Objekte maximiert wird.

8. Verfahren nach Anspruch 7, wobei der maschinelle Lernalgorithmus derart angelernt wird, dass Stillstandzeiten der Roboter minimiert werden und gleichzeitig maximal viele der potentiell zu greifenden Objekte durch die Roboter gegriffen werden.

9. Verfahren nach Anspruch 7 oder 8, wobei der maschinelle Lernalgorithmus ferner derart angelernt wird, dass eine variabel einstellbare Förderbandgeschwindigkeit maximiert wird.

10. Verfahren nach einem der vorstehenden Ansprüche, wobei das Ermitteln der potentiell zu greifenden Objekte mithilfe von Sensoren, insbesondere mit Hilfe einer oder mehrerer Kameras, erfolgt.

11. Verfahren nach einem der vorstehenden Ansprüche, wobei das Anlernen des maschinellen Lernalgorithmus in einer Anlernphase und mittels realer Objekte vorgenommen wird.

12. Verfahren nach einem der Ansprüche 1 bis 11, wobei das Anlernen des maschinellen Lernalgorithmus in einer Anlernphase mittels einer Simulation der Objekte vorgenommen wird.

13. Computerprogrammprodukt mit einem Computerprogramm, c umfassend Befehle, die bei der Ausführung des Programms auf einer programmgesteuerten Einrichtung aufweisend einen Roboter in einer Anordnung aus mehreren Robotern, insbesondere einer Bewegungssteuerungseinheit, diese veranlassen, die Schritte des Verfahrens nach einem der Ansprüche 1 bis 12 auszuführen.

14. Produktionsmaschine, insbesondere Verpackungsmaschine, aufweisend einen Roboter in einer Anordnung aus mehreren Robotern und eine Bewegungssteuerung zur Steuerung der Bewegung des Roboters, wobei die Produktionsmaschine das Verfahren nach einem der Ansprüche 1 bis 12 durchführt.

## Claims

1. Method for optimizing an automated process for selecting and gripping an object by means of a robot in an arrangement consisting of a plurality of robots with regard to a specifiable optimization criterion, wherein the objects to be potentially gripped irregularly occur with regard to their spatial position and a time of their arrival, having the following steps:
- determination (S1) of objects to be potentially gripped by the robots;
- determination (S2) of a priority characteristic in each case, wherein the priority characteristic controls the priority of those objects which were jointly assigned to a robot, as well as an assignment to one of the robots for the objects to be potentially gripped by means of a machine learning algorithm, taking the optimization criterion into account, wherein the machine learning algorithm takes into account the position of the object with respect to the respective operating range of the plurality of robots and the positions of the other objects and of the other objects in the operating range of the plurality of robots and the possible gripping processes of the plurality of robots and the optimization criterion; and
- selection and gripping (S3) depending on the assignment and the priority characteristic.

2. Method according to Claim 1, wherein the objects are moved on a conveyor belt with a conveyor-belt speed.

3. Method according to Claim 1 or 2, wherein a monitored learning algorithm or a reinforcing learning algorithm, in particular based on an artificial neural network, is used as a machine learning algorithm.

4. Method according to any of the preceding claims, wherein an instance-based learning algorithm is used as a machine learning algorithm.

5. Method according to any of the preceding claims, wherein energy consumption is minimized by the optimization criterion.

6. Method according to any of the preceding claims, wherein the machine learning algorithm is taught in such a way that a trajectory speed of the robots is minimized and, at the same time, a maximum of the potentially grippable objects are gripped by the robots.

7. Method according to any of the preceding claims, wherein a throughput of the objects is maximized by the optimization criterion.

8. Method according to Claim 7, wherein the machine learning algorithm is taught in such a way that downtimes of the robots are minimized and, at the same time, a maximum of the potentially grippable objects are gripped by the robots.

9. Method according to Claim 7 or 8, wherein the machine learning algorithm is furthermore taught in such a way that a variably adjustable conveyor-belt speed is maximized.

10. Method according to any of the preceding claims, wherein the objects to be potentially gripped are determined with the aid of sensors, in particular with the aid of one or more cameras.

11. Method according to any of the preceding claims, wherein the machine learning algorithm is taught during a teaching phase and by means of real objects.

12. Method according to one of Claims 1 to 11, wherein the machine learning algorithm is taught during a teaching phase by means of a simulation of the objects.

13. Computer-program product with a computer program, comprising instructions which, during the execution of the program on a program-controlled device having a robot in an arrangement consisting of a plurality of robots, in particular a motion-control unit, cause it to carry out the steps of the method according to one of Claims 1 to 12.

14. Production machine, in particular a packaging machine, having a robot in an arrangement consisting of a plurality of robots and a motion-control system for controlling the motion of the robot, wherein the production machine carries out the method according to one of the Claims 1 to 12.

## Revendications

1. Procédé d'optimisation d'une opération automatisée permettant la sélection et la préhension d'un objet par un robot dans un ensemble de plusieurs robots eu égard à un critère d'optimisation prédéfinissable, les objets à prendre potentiellement se présentant irrégulièrement eu égard à leur position dans l'espace et à un instant de leur arrivée, comportant les étapes suivantes :
- détermination (S1) d'objets à prendre potentiellement par les robots ;
- détermination (S2) de respectivement un connaisseur de priorité, le connaisseur de priorité réglant la priorité des objets qui sont affectés ensemble à un robot, ainsi que d'une affectation à un des robots pour les objets à prendre potentiellement, au moyen d'un algorithme d'apprentissage machine compte tenu du critère d'optimisation, l'algorithme d'apprentissage machine tenant compte de la position de l'objet eu égard à la zone de travail respective des plusieurs robots, et des positions des autres objets ainsi que des autres objets dans la zone de travail des plusieurs robots, et des opérations de préhension possibles des plusieurs robots, ainsi que du critère d'optimisation et
- sélection et préhension (S3) en fonction de l'affectation et du connaisseur de priorité.

2. Procédé selon la revendication 1, les objets étant déplacés sur un convoyeur avec une vitesse de convoyeur.

3. Procédé selon la revendication 1 ou 2, en tant qu'algorithme d'apprentissage machine étant utilisé un algorithme d'apprentissage surveillé ou un algorithme d'apprentissage par renforcement, en particulier sur la base d'un réseau neuronal artificiel.

4. Procédé selon l'une des revendications précédentes, en tant qu'algorithme d'apprentissage machine étant utilisé un algorithme d'apprentissage basé sur des instances.

5. Procédé selon l'une des revendications précédentes, une consommation d'énergie étant minimisée par le critère d'optimisation.

6. Procédé selon l'une des revendications précédentes, l'algorithme d'apprentissage machine étant entraîné de telle sorte qu'une vitesse de trajectoire des robots est minimisée et qu'en même temps une quantité maximale des objets pouvant être pris potentiellement est prise par les robots.

7. Procédé selon l'une des revendications précédentes, une cadence des objets étant maximisée par le critère d'optimisation.

8. Procédé selon la revendication 7, l'algorithme d'apprentissage machine étant entraîné de telle sorte que des temps d'arrêt des robots sont minimisés et qu'en même temps une quantité maximale des objets pouvant être pris potentiellement est prise par les robots.

9. Procédé selon la revendication 7 ou 8, l'algorithme d'apprentissage machine étant en outre entraîné de telle sorte qu'une vitesse de convoyeur réglable de manière variable est maximisée.

10. Procédé selon l'une des revendications précédentes, la détermination des objets à prendre potentiellement étant effectuée à l'aide de capteurs, et plus particulièrement à l'aide d'une ou de plusieurs caméras.

11. Procédé selon l'une des revendications précédentes, l'apprentissage de l'algorithme d'apprentissage machine étant effectué dans une phase d'apprentissage et au moyen d'objets réels.

12. Procédé selon l'une des revendications 1 à 11, l'apprentissage de l'algorithme d'apprentissage machine étant effectué dans une phase d'apprentissage au moyen d'une simulation des objets.

13. Produit de programme informatique avec un programme informatique comprenant des ordres qui, étant donné l'exécution du programme sur un dispositif commandé par programme comprenant un robot dans un ensemble de plusieurs robots, et plus particulièrement une unité de commande de mouvement, leur font exécuter les étapes du procédé selon l'une des revendications 1 à 12.

14. Machine de production, et plus particulièrement machine de conditionnement, comportant un robot dans un ensemble de plusieurs robots et une commande de mouvement pour commander le mouvement du robot, la machine de conditionnement exécutant le procédé selon l'une des revendications 1 à 12.
